Europäisches Patentamt

European Patent Office

Office européen des brevets

(19)

(11) Veröffentlichungsnummer: **0 258 659**
**B1**

(12) **EUROPÄISCHE PATENTSCHRIFT**

(45) Veröffentlichungstag der Patentschrift:
04.04.90

(51) Int. Cl.⁴: **G01L 1/12**, G01L 3/14, G01L 5/16

(21) Anmeldenummer: **87111202.5**

(22) Anmeldetag: **03.08.87**

(54) Sensoranordnung.

(30) Priorität: **14.08.86 DE 3627616**

(43) Veröffentlichungstag der Anmeldung:
**09.03.88 Patentblatt 88/10**

(45) Bekanntmachung des Hinweises auf die Patenterteilung:
**04.04.90 Patentblatt 90/14**

(84) Benannte Vertragsstaaten:
**DE FR GB IT NL SE**

(56) Entgegenhaltungen:
**EP-A- 0 069 073**

**IEEE TRANSACTIONS ON MAGNETICS, Band MAG-17,
Nr. 3, Mai 1981, Seiten 1317-1319; K. MOHRI et al.: "New
extensometers using amorphous magnetostrictive
ribbon wound cores"
MESURES-REGULATION-AUTOMATISME, Band 47,
Nr. 3, 1982, Paris, FR: Un tore magnétique pour
concurrencer les jauges de contrainte?"**

(73) Patentinhaber: **Siemens Aktiengesellschaft,
Wittelsbacherplatz 2, D-8000 München 2(DE)**

(72) Erfinder: **Fritz, Harald, Dipl.-Ing. (FH), Hebelstrasse 5,
D-7517 Waldbronn 3(DE)**
Erfinder: **Wurll, Peter, Dipl.-Ing., Kärcherstrasse 60,
D-7500 Karlsruhe(DE)**

**Beschreibung**

Die Erfindung betrifft eine Sensoranordnung für mechanische Kräfte und Momente mit den Merkmalen des Oberbegriffs des Anspruchs 1.

Es ist bereits eine Sensoranordnung aus der Druckschrift IEEE Transactions on Magnetics, Vol.-MAG-17, No. 3, May 1981, Seite 1317 bis 1319 bekannt. Der weichmagnetische Kern besteht aus einem Ring, der von zwei aus jeweils zwei Teilen bestehenden Spulen umgeben ist. Je nach Durchbiegung des weichmagnetischen Kerns wird sich, bedingt durch die Magnetostriktion des Materials, die Magnetisierungskennlinie ändern, so daß die in der Sekundärwicklung induzierte Spannung sich ändert.

Weiterhin ist eine Sensoranordnung aus der EP-A1 69 073 bekannt, bei der induktive Sensoren derart zwischen zwei Platten angeordnet sind, daß eine Kraftbeaufschlagung auf einer Platte zu einer Betätigung der induktiven Sensoren führt. Aus der Relation der Bewegungen an den Sensoren sind die Kräfte und Momente ermittelbar.

Der Erfindung liegt die Aufgabe zugrunde, eine Sensoranordnung für Kräfte und Momente in einer Kraftübertragungsanordnung zu schaffen, die bei ausreichender Genauigkeit eine einfache Detektion und Auswertung der Kräfte und Momente gewährleistet.

Zur Lösung dieser Aufgabe weist die Sensoranordnung der eingangs genannten Art die im Kennzeichen des Anspruchs 1 angegebenen Merkmale auf.

Bei Handhabungs-, Montage- und Fügeaufgaben in der Produktionstechnik ist es oft nötig, Kräfte und Momente mit beliebig im Raum liegenden Achsen in je drei senkrecht aufeinanderstehende Kraft- und Momentenkomponenten zu zerlegen und zu messen. Bei Kraftübertragungsanordnungen ist der Einsatz von magneto-elastischen Sensoren gemäß der Erfindung als Basissensoren vor allem deswegen vorteilhaft, da sie sehr klein, leicht und preiswert sind und die analoge Meßsignalauswertung relativ einfach durchzuführen ist.

Bei einem besonders vorteilhaften Ausführungsbeispiel ist die Kraftübertragungsanordnung gemäß Anspruch 2 ein Koppelglied im beweglichen Arm eines Handhabungsgeräts. Es kommt bei dieser Anordnung besonders darauf an, jeden Basissensor so einzuspannen, daß er den Weg, welcher in einer Kraftmeß- oder Wegmeßeinrichtung auftritt, möglichst unverfälscht in der vorgesehenen Richtung messen kann, während er auf andersgerichtete Verformungen der Einrichtung möglichst nicht reagieren soll.

Weitere vorteilhafte Ausgestaltungen der Erfindung sind mit den Unteransprüchen 3 und 4 angegeben.

Die Erfindung wird anhand der Figuren erläutert, wobei

Figur 1 eine Ansicht einen magneto-elastischen Basissensors, wie er zum Stand der Technik gehört, und

Figur 2 ein Ausführungsbeispiel einer Kraft-Momenten-Sensoranordnung mit magneto-elastischen Basissensoren in einem mechanischen Koppelglied in verschiedenen Ansichten zeigt.

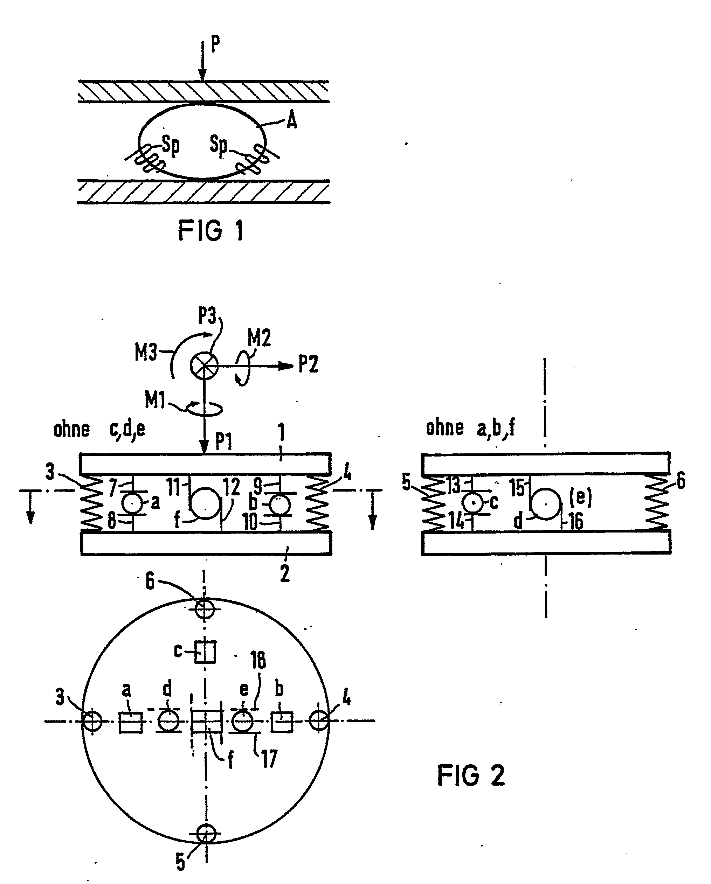

In der Figur 1 ist ein bekannter weichmagnetischer Sensor mit einem Ring A dargestellt, der mit einer Kraft P beaufschlagt wird. An Spulen Sp, die um den Ring A gewickelt sind, kann über eine hier nicht dargestellte elektronische Schaltung beispielsweise eine induzierte Spannung oder Spannungsänderung als Meßsignal S abgenommen werden, die bei einer Verformung des Ringes A entsteht. Der weichmagnetische Werkstoff des Ringes A weist eine Wechselwirkung zwischen den magnetischen und mechanischen Eigenschaften auf. Eine mechanische Beanspruchung führt zu einer reversiblen Änderung der Hystereseschleife, d. h. der Permeabilität, der Remanenz und auch der Koerzitivfeldstärke, so daß eine elektrisch auswertbare Beeinflussung des induktiven Verhaltens stattfindet.

Die Figur 2 zeigt eine Sensoranordnung zur Messung von drei rechtwinklig aufeinanderstehenden Kräften P1, P2, P3 und drei Momenten M1, M2, M3 am Beispiel eines elastischen Koppelgliedes, welches beispielsweise in einen Arm eines hier nicht dargestellten Handhabungsgerätes (Industrieroboter) eingebaut ist und dessen von den einzelnen Kräften P1, P2, P3 und Momenten M1, M2, M3 verursachte Verformungen durch zweckmäßig eingespannte weichmagnetische, zylindrische Ringe a, b, c, d, e, f erfaßt werden. Das Koppelglied weist zwei hier fest z. B. im Verlauf des Arms des Handhabungsgerätes angebrachte Teile 1 und 2 auf, die hier über Schraubenfedern 3, 4, 5 und 6 elastisch miteinander verbunden sind. Zur Kraftübertragung auf die Ringe a ... f sind an den festen Teilen 1 und 2 Stege angebracht, die jeweils einen Ring derart einfassen, daß jeweils eine Kraft P1, P2 oder P3 bzw. ein Moment M1, M2 oder M3 einen der Ringe a ... f verbiegt. Es fassen hierzu folgende sich annähernd gegenüberliegende Stege die bezeichneten Ringe ein:

7 und 8 → a
9 und 10 → b
13 und 14 → c
15 und 16 → d
17 und 18 → e
11 und 12 → f

Aus Meßsignalen Sa, Sb ... Sf, die entsprechend dem Meßsignal S in der Figur 1 durch die mechanische Beeinflussung des magnetischen Verhaltens der Ringe a ... f hervorgerufen werden, können die Kräfte und Momente nach folgender Matrix errechnet werden:

$$Sa + Sb \triangleq P1$$
$$Sb - Sa \triangleq M3$$
$$Sc \quad\quad \triangleq M2 + P1 \text{ bzw. } Sc - P1 \triangleq M2$$
$$Sd + Se \triangleq P3$$
$$Se - Sd \triangleq M1$$
$$Sf \quad\quad \triangleq P2$$

**Patentansprüche**

1. Sensoranordnung für mechanische Kräfte und Momente
   - mit magneto-elastischen Basissensoren mit jeweils einem weichmagnetischen Kern, der aufgrund der mechanischen Kräfte und Momente verformbar und dabei hinsichtlich seiner magnetischen Eigenschaften veränderbar ist, und
   - mit einer elektronischen Erfassungs- und Auswerteschaltung, die eine mit dem Kern verbundene induktive Eingangsstufe aufweist und mit der die über den Kern veränderbaren elektrischen Eigenschaften auswertbar sind, dadurch gekennzeichnet, daß
   - die Sensoranordnung in einer Kraftübertragungsanordnung angeordnet ist, wobei zwei fest angebrachte Teile (1, 2) über eine Federanordnung (3, 4, 5, 6) miteinander verbunden sind und sich zwischen diesen Teilen jeweils die magneto-elastischen Basissensoren (a, b, c, d, e, f) befinden, und daß
   - an den festen Teilen (1, 2) sich annähernd gegenüberliegende Stege (7 ... 16) angebracht sind, die jeweils einen der magneto-elastischen Basissensoren (a ... f) derart einfassen, daß die jeweils zwischen den festen Teilen (1, 2) auftretenden Kraftkomponenten und Momente über die Stege (7 ... 16) zu einer Verformung jeweils mindestens eines der magneto-elastischen Basissensoren (a ... f) führen.

2. Sensoranordnung nach Anspruch 1, **dadurch gekennzeichnet,** daß
   - die Kraftübertragungsanordnung ein Koppelglied im beweglichen Arm eines Handhabungsgeräts ist.

3. Sensoranordnung nach Anspruch 1 oder 2, **dadurch gekennzeichnet,** daß
   - die Federanordnung aus Schraubenfedern (3, 4, 5, 6) besteht.

4. Sensoranordnung nach einem der vorhergehenden Ansprüche, **dadurch gekennzeichnet,** daß
   - die weichmagnetischen Kerne aus einem amorphen Material mit negativer Magnetostriktion bestehen.

**Revendications**

1. Dispositif de détection pour des forces et des moments mécaniques, comprenant
   - des capteurs de base magnéto-élastiques comportant respectivement un noyau en matériau magnétique doux, qui est déformable sous l'action des forces et moments mécaniques et dont les caractéristiques magnétiques sont modifiables,
   - un circuit électronique de détection et d'évaluation, qui comporte un étage inductif d'entrée relié au noyau et dont les caractéristiques électriques, modifiables au moyen du noyau, peuvent être évaluées, caractérisé par le fait que
   - le dispositif de détection est agencé dans un dispositif de transmission de force, deux parties (1, 2) montés de façon fixe étant reliées entre elles par l'intermédiaire d'un dispositif à ressorts (3, 4, 5, 6), tandis que les capteurs de base magnéto-élastiques (a, b, c, d, e, f) sont disposés respectivement entre ces parties, et

   - sur les parties fixes (1, 2) se trouvent disposées des barrettes (7 ... 16) situées approximativement en vis-à-vis, qui enserrent respectivement l'un des capteurs de base magnéto-élastiques (a ... f) de telle sorte que les composantes de force et moments, qui apparaissent respectivement entre les parties fixes (1, 2), conduisent, par l'intermédiaire des barrettes (7 ... 16), à une déformation respectivement d'au moins l'un des capteurs de base magnéto-élastiques (a ... f).

2. Dispositif de détection suivant la revendication 1, caractérisé par le fait que
   - le dispositif de transmission de force est un organe d'accouplement situé dans le bras mobile d'un appareil de manipulation.

3. Dispositif de détection suivant la revendication 1 ou 2, caractérisé par le fait que
   - le dispositif à ressorts est constitué par des ressorts hélicoïdaux (3, 4, 5, 6).

4. Dispositif de détection suivant l'une des revendications précédentes, caractérisé par le fait que
   - les noyaux magnétiques doux sont réalisés en un matériau amorphe présentant une magnétostriction négative.

**Claims**

1. Sensor arrangement for mechanical forces and moments
   - with magneto-elastic base sensors with in each case a soft magnetic core, which is deformable because of the mechanical powers and moments and in this connection is variable with regard to its magnetic properties, and
   - with an electronic monitoring and evaluation circuit, which has an inductive input stage connected to the core and with which the electrical properties, variable by means of the core, can be evaluated, characterized in that
   - the sensor arrangement is arranged in a power transmission arrangement in which two firmly situated parts (1, 2) are connected to one another by means of a spring arrangement (3, 4, 5, 6) and between these parts there are located in each case the magneto-elastic base sensors (a, b, c, d, e, f), and that
   - bars (7 ... 16), lying approximately opposite one another, are situated on the fixed parts (1, 2), the bars in each case enclosing one of the magneto-elastic base sensors (a ... f) in such a way that the force components and moments occurring in each case between the fixed parts (1, 2) lead by means of the bars (7 ... 16) to a deformation in each case of at least one of the magneto-elastic base sensors (a ... f).

2. Sensor arrangement according to claim 1, characterized in that
   - the power transmission arrangement is a coupling element in the movable arm of a manipulating apparatus.

3. Sensor arrangement according to claim 1 or 2, characterized in that
   - the spring arrangement consists of spiral springs (3, 4, 5, 6).

4. Sensor arrangement according to one of the preceding claims, characterized in that
— the soft magnetic cores consist of an amorphous material with negative magnetostriction.

FIG 1

FIG 2